Europäisches Patentamt

**European Patent Office**

Office européen des brevets

(19)

(11) Numéro de publication : **0 026 699**
**B1**

(12) **FASCICULE DE BREVET EUROPÉEN**

(45) Date de publication du fascicule du brevet :
16.11.83

(51) Int. Cl.³ : **G 11 B 5/09, H 04 L 25/49**

(21) Numéro de dépôt : **80401333.2**

(22) Date de dépôt : **19.09.80**

(54) **Procédé et dispositif de codage de données binaires, dispositif de décodage des données codées et système de transmission comportant de tels dispositifs.**

(30) Priorité : **01.10.79 FR 7924419**

(43) Date de publication de la demande :
**08.04.81 Bulletin 81/14**

(45) Mention de la délivrance du brevet :
**16.11.83 Bulletin 83/46**

(84) Etats contractants désignés :
**AT BE CH DE GB IT LI LU NL SE**

(56) Documents cités :
**FR A 2 358 786**
**US A 4 072 987**
**US A 4 146 909**

**IBM TECHNICAL DISCLOSURE BULLETIN vol. 13, no 4, septembre 1970 New York US S. S. LAVENBERG et al. : « Code for DC level magnetic recording », pages 1001-1002**

**NACHRICHTENTECHNISCHE ZEITSCHRIFT, vol. 27, no 6, juin 1974, Berlin DE CAFLISCH et al. : « Leistungsspektren von Blockcodes », pages 219-224**

**IEEE TRANSACTIONS ON MAGNETICS, vol. MAG-15, no 3, juillet 1979 New York US JACOBY :**

(73) Titulaire : **THOMSON-CSF**
**173, Boulevard Haussmann**
**F-75379 Paris Cedex 08 (FR)**

(72) Inventeur : **Artigalas, Max**
**"THOMSON-CSF" SCPI 173, Bld Haussmann**
**F-75360 Paris Cedex 08 (FR)**

(74) Mandataire : **Turlèque, Clotilde et al**
**THOMSON-CSF SCPI 173, Bld Haussmann**
**F-75379 Paris Cedex 08 (FR)**

(56) Documents cités :
**« High Density Recording with Write Current Shaping » pages 1124-1130**

**THE BELL SYSTEM TECHNICAL JOURNAL vol. 53, no 6, juillet-août 1974 New York US GREENSTEIN : « Spectrum of a Binary Signal Block Coded for DC Suppression », pages 1103-1126**

**IBM TECHNICAL DISCLOSURE BULLETIN vol. 17, no 5, octobre 1974 New York US MIESSLER : « Translator for run length limited code », pages 1489-1491**

**IBM TECHNICAL DISCLOSURE BULLETIN vol. 21, no 1, juin 1978 New York US BECKENHAUER et al. : « Phase alignment of 1F and 2F clocks », page 326**

Jouve, 18, rue St-Denis, 75001 Paris, France

Procédé et dispositif de codage de données binaires, dispositif de décodage des données codées et système de transmission comportant de tels dispositifs

La présente invention concerne les procédés de codage de données binaires, les dispositifs de codage et les dispositifs de décodage utilisés dans les systèmes de transmission de données binaires sur un canal, en particulier dans les systèmes comportant un canal ne transmettant pas les composantes continues et les basses fréquences, tels que le magnétoscope.

Pour de tels systèmes de transmission, il est nécessaire de traduire les informations à transmettre dans un code adapté aux caractéristiques propres des canaux, notamment à leur bande passante.

De plus, pour être optimal, un type de codage doit présenter les propriétés suivantes :
— reconstitution d'une horloge sans adjonction d'un canal particulier
— détection facile des erreurs
— compression de la bande passante du signal codé afin de transmettre les informations codées en garantissant une restitution sans erreur du signal binaire
— suppression de la nécessité d'une transmission de la composante continue de façon, par exemple, à pouvoir utiliser les couplages par transformateur ainsi que les amplificateurs à couplage alternatif.

Plusieurs types de codage sont actuellement connus, mais aucun ne présente toutes les propriétés précitées. Ainsi le code NRZ (non return to zero) pose des problèmes de suppression de la composante continue et de récupération d'horloge.

Le code Miller et ses dérivés ne permettent pas une détection facile des erreurs, ni l'introduction de mots de code particuliers pour synchroniser les signaux d'horloge lors du décodage.

Les procédés classiques de codage par blocs qui consistent à former le signal codé en remplaçant un bloc de M bits du signal d'entrée par un bloc de 2N bits contenant un nombre égal de 0 et de 1 ont été décrits par exemple dans un article intitulé « Code for DC level Magnetic recording » dans « IBM Technical Disclosure Bulletin », vol. 13, n° 4, sept. 1970, pages 1001 et 1002, ou dans un article intitulé « Leistungsspektren von Blockcodes » dans « NACHRICHTENTECH-NISCHE ZEITSCHRIFT », vol. 27, n° 6, juin 1974, pages 219-224.

L'objet de ces procédés de codage est la suppression de la composante continue. Mais ces codes ne permettent pas, en même temps que cette suppression, une réduction de la bande passante du signal. Au contraire, cette bande passante est augmentée.

La présente invention a pour objectifs un procédé de codage utilisant un type de code présentant les propriétés optimales définies précédemment, un codeur et un décodeur pour mettre en œuvre ce procédé de codage à l'aide de moyens simples, ainsi qu'un système de transmission comportant de tels codeur et décodeur.

Selon l'invention, un procédé de codage d'un signal d'entrée constitué d'une suite de groupes $G_i$ de n données binaires (i pouvant varier de 1 à $2^n$, n entier positif), la fréquence de répétition des données binaires étant F, est caractérisé en ce qu'il est associé à chaque groupe un couple de nombres binaires ($A_i$, $\overline{A_i}$), $\overline{A_i}$ étant le complément de $A_i$ et chacun de ces deux nombres étant défini par 2n bits dont la fréquence de répétition est 2F avec autant de bits à l'état « 1 » que de bits à l'état « 0 », le nombre ne comportant que des blocs d'au moins deux bits successifs identiques, sauf éventuellement les bits extrêmes de ces nombres, à savoir le bit de poids le plus faible et le bit de poids le plus fort, qui peuvent être isolés c'est-à-dire, respectivement non suivis et non précédés d'un bit identique, et en ce que le signal codé est formé en remplaçant les n bits de chaque groupe de bits $G_i$ du signal d'entrée, soit par les 2n bits du nombre correspondant $A_i$, soit par les 2n bits du nombre complément $\overline{A_i}$, de façon que le bit de poids le plus faible du nombre choisi et que le bit de poids le plus fort du nombre binaire associé au groupe précédant G/p ne soient pas isolés dans le signal codé.

Selon l'invention, il est également prévu un dispositif de codage pour mettre en œuvre ce procédé et un dispositif de décodage propre à décoder un signal codé selon ce procédé ainsi qu'un système de transmission comportant de tels dispositifs.

L'invention sera mieux comprise et d'autres caractéristiques apparaîtront à l'aide de la description ci-après et des figures s'y rapportant qui représentent :
la figure 1, un dispositif de codage selon l'invention ;
la figure 2, un dispositif de décodage selon l'invention ;
la figure 3, un schéma détaillé d'un dispositif de la figure 2 ;
la figure 4a, un chronogramme des signaux permettant d'expliquer les dispositifs de codage et de décodage ;
la figure 4b, un tableau de correspondance permettant de même, d'expliquer les dispositifs de codage et de décodage.

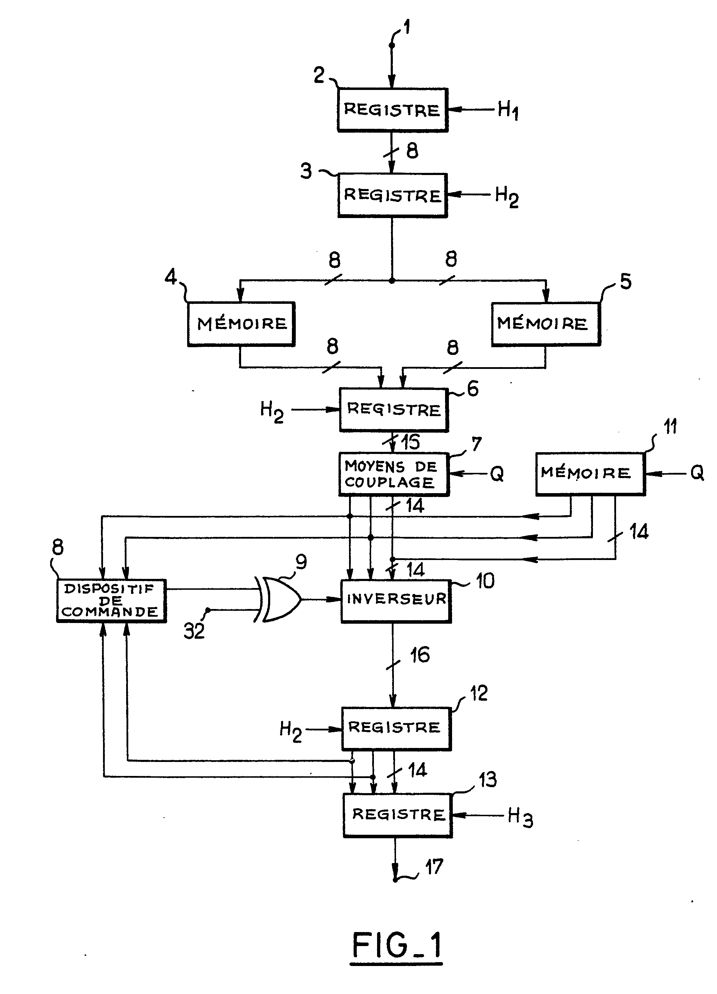

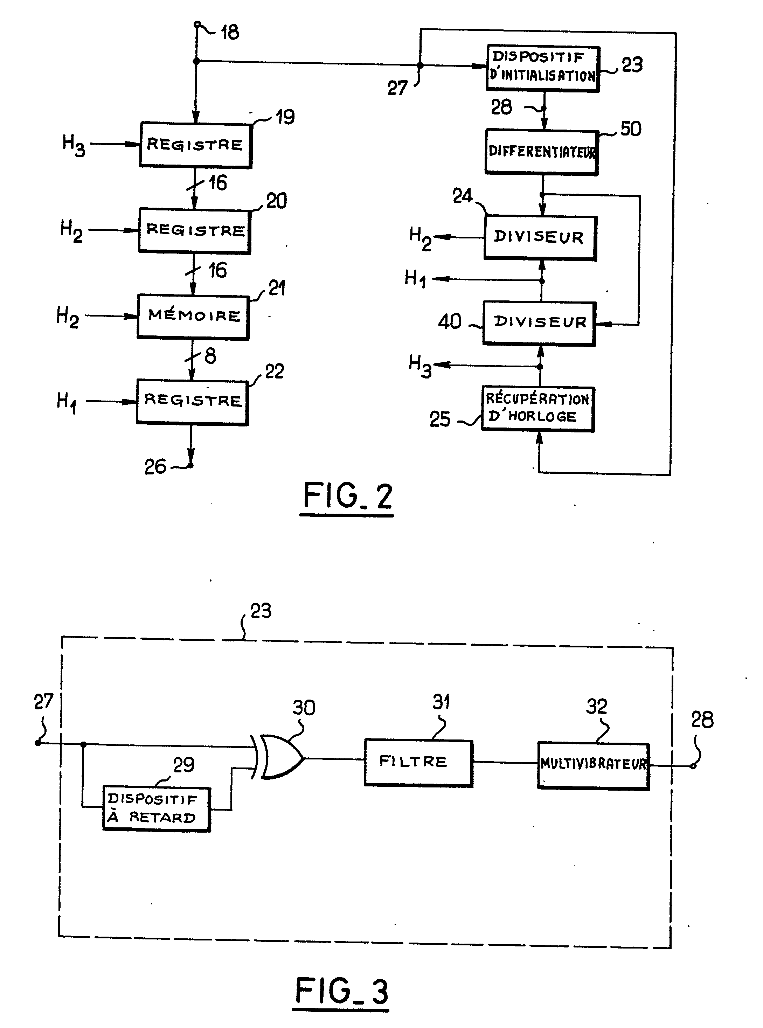

Sur les figures 1 et 2, une liaison simple est représentée par un trait fin et une liaison multiple par un trait fin coupant un petit segment de droite à côté duquel un chiffre indique le nombre de liaisons simples comportant cette liaison multiple.

De plus, seuls les signaux d'horloge et les dispositifs de synchronisation utiles à la compréhension de l'invention ont été représentés en vue de rendre les dessins plus clairs et de simplifier l'exposé.

Sur la figure 1, une borne d'entrée 1 est reliée à l'entrée d'un registre mémoire 2 à inscription en série et lecture en parallèle. Les huit sorties de ce registre 2 sont respectivement couplées à travers un registre à inscription et lecture en parallèle 3 aux huit entrées d'une mémoire morte 4 et aux huits entrées d'une mémoire morte 5. Les huit sorties de chacune de ces deux mémoires 4 et 5 sont respectivement couplées aux seize entrées de moyens de couplage 7 à travers un registre 6 à inscription et lecture en parallèle. Une première et une deuxième sortie de ces moyens de couplage 7 sont respectivement reliées à une première et à une deuxième entrée d'un dispositif de commande 8, à une première et à une deuxième entrée d'un inverseur 10, ainsi qu'à une première et à une deuxième sortie d'une mémoire morte 11.

Quatorze sorties supplémentaires de ces moyens de couplage 7 sont respectivement reliées à quatorze entrées supplémentaires de l'inverseur 10 et à quatorze sorties supplémentaires de la mémoire 11. Les seize sorties de l'inverseur 10 sont respectivement connectées aux seize entrées d'un registre 12 à inscription et lecture en parallèle. Une première et une deuxième sortie de ce registre 12 sont respectivement reliées à une troisième et à une quatrième entrée du dispositif de commande 8, ainsi qu'à une première et à une deuxième entrée d'un registre 13 à inscription en parallèle et lecture en série. Quatorze sorties supplémentaires de ce registre 12 sont respectivement reliées à quatorze entrées supplémentaires du registre 13. La sortie du registre 13 est reliée à une borne de sortie 17.

La sortie du dispositif de commande 8 est reliée à une première entrée d'une porte OU exclusif, 9, dont une seconde entrée est reliée à une borne 32. La sortie de cette porte OU exclusif, 9, est connectée à une entrée de commande de l'inverseur 10.

Chacun des registres 2, 3, 6, 12 et 13 comportent en outre une entrée d'horloge. L'entrée d'horloge du registre 2 reçoit un signal d'horloge $H_1$ à la fréquence F. Le registre 13 reçoit sur son entrée d'horloge un signal $H_3$ à la fréquence 2F. Enfin les registres 3, 6 et 12 reçoivent sur leur entrée d'horloge le signal d'horloge $H_2$ à la fréquence F/8. Les signaux d'horloge $H_1$, $H_2$ et $H_3$ sont en phase. Les moyens de couplage 7 et la mémoire 11 comportent en outre une entrée de commande recevant un signal Q. La borne 32 reçoit un signal Y.

Les mémoires 4 et 5 utilisées dans notre mode de réalisation sont des mémoires PROM (« Programmable read only memory » en littérature anglaise) de 2K bits.

Le dispositif qui vient d'être décrit permet de coder $2^8$ états différents, chacun de ces $2^8$ états étant repéré par un groupe de huit bits de durée totale 8T, chaque bit ayant une durée T (égale à 1/F) et pouvant prendre soit l'état « 1 », soit l'état « 0 ».

A partir d'un signal d'entrée constitué par une suite de groupes de huits bits, chaque groupe correspondant à un état à coder, le dispositif génère sur la borne de sortie 17 un signal codé constitué d'une suite de mots binaires de seize bits, chaque bit ayant une durée T/2 et chaque mot correspondant à un groupe de huit bits du signal d'entrée, donc à un état à coder. Le signal codé obtenu présente de nombreuses propriétés intéressantes, à savoir une bande de fréquence étroite (sensiblement équivalente à celle nécessaire pour le NRZ) ne comportant pas en outre de composante continue, une reconstitution d'un signal d'horloge utile au décodage sans adjonction d'un canal autre que celui servant à transmettre le signal codé, et une détection facile des erreurs.

Le procédé mis en œuvre par ce dispositif de codage est le suivant :

Parmi les $2^{16}$ mots de seize bits possibles à associer à un état à coder, considérons uniquement les mots binaires satisfaisant aux conditions suivantes :

— Parmi les seize bits formant un mot, huit sont à l'état « 1 » et huit sont à l'état « 0 » de façon à éviter la transmission d'un signal codé dont le spectre de fréquence comporte une composante continue.

— De plus, il ne peut exister, mis à part les bits se trouvant aux extrémités du mot, un bit à l'état « X » (X pouvant prendre soit la valeur « 1 », soit la valeur « 0 ») qui ne soit pas suivi ou précédé d'un bit dont l'état est « X ».

Dans la suite du texte et dans les revendications, un bit qui ne remplira pas cette dernière condition sera dit « isolé ».

Le nombre de mots binaires satisfaisant à ces deux conditions est 592, soit, par exemple, 296 mots $A_j$ (j variant de 1 à 296) commençant uniquement par un bit à l'état « 0 » et 296 mots compléments $\overline{A_j}$ commençant uniquement par un bit à l'état « 1 ».

Si à chaque état à coder, il est associé un mot binaire de durée 8T pris parmi les 296 mots $A_j$, le bit extrême d'un mot peut se trouver « isolé ». En effet, le signal codé étant constitué d'une suite de mots de seize bits associés à chacun des états à coder, il faut que l'association en série des mots ne favorise pas l'apparition de bits « isolés ». Soit un mot $A_p$, associé à un état p, ayant son bit extrême b de poids le plus faible « isolé ». Dans le cas où l'état précédemment codé est associé à un mot dont le dernier bit, de poids le plus fort, n'est pas au même état que le bit b, ce bit b restera « isolé » dans le signal codé.

Afin d'éviter une telle représentation, il est associé à l'état p non pas le mot $A_p$ mais le mot complément $\overline{A_p}$, ainsi le bit $\overline{b}$ devenu $\overline{b}$ ne sera pas isolé.

Le procédé de codage selon l'invention consiste donc à remplacer dans le signal d'entrée chacun des groupes de huit bits correspondant aux états à coder, soit par un des j mots de seize bits $A_j$, soit par un des j mots compléments $\overline{A_j}$, en fonction du dernier bit du mot précédemment associé (bit de poids le plus fort).

De plus le nombre de couples $(A_j, \overline{A_j})$ possibles étant plus élevé que le nombre d'états à coder (296 couples pour 256 états), il est préférable d'éliminer les couples pour lesquels le nombre de bits consécutifs à l'état « 0 », ou de bits consécutifs à l'état « 1 », est le plus grand. Ainsi le spectre du signal codé comportera moins de basses fréquences, et la récupération d'un signal d'horloge sera facilitée par un nombre de transitions maximal. Il est aussi utile d'éliminer certains mots qui peuvent être utilisés à la reconnaissance d'instants caractéristiques.

Dans notre exemple de réalisation, le signal codé obtenu est constitué d'une suite de bits, telle que l'écart de temps minimum entre deux transitions est T (comme dans le NRZ) et donc l'écart maximum est 3T.

Le fonctionnement du dispositif mettant en œuvre le procédé de codage qui vient d'être décrit est le suivant :

Le signal d'entrée reçu sur la borne 1 comporte une suite de groupes de huit bits à la fréquence F (égale à 1/T). La fréquence des groupes est F/8, chacun de ces groupes correspond à un état à. coder.

Les registres mémoire 2 et 3 permettent de délivrer en parallèle les huit bits de chaque groupe formant le signal d'entrée.

Le registre mémoire 2 inscrit les bits du signal d'entrée en série suivant la fréquence F du signal d'horloge $H_1$. Le registre mémoire 3 inscrit en parallèle les bits lus sur les huit sorties du registre 2 et délivre ces bits en parallèle sur ses huit sorties suivant la fréquence F/8 du signal d'horloge $H_2$. les mémoires mortes 4 et 5 comportent chacune huit entrées d'adresse. Dans chaque mémoire sont mémorisées $2^8$ mots de 8 bits, tels que les $2^8$ mots de seize bits constitués de l'association des deux mots de 8 bits repérés par une même adresse dans les mémoires 4 et 5 correspondant à des mots choisis parmi les 296 mots $A_j$ précédemment décrits.

Ainsi, à chaque combinaison de huit bits reçue par les entrées d'adresse des mémoires 4 et 5, il est délivré par ces mémoires un mot de seize bits ne comportant pas de bits « isolés », exceptés les bits extrêmes de ce mot. Le registre 6 permet de stocker ces mots de seize bits et de les restituer suivant la fréquence F/8.

Le signal Q est de niveau logique 1 pendant une durée égale à 24T avant que le signal d'entrée soit reçu sur la borne d'entrée 1. Pendant cette durée, les moyens de couplage 7 sont commandés afin d'interrompre la ligne à la sortie du registre 6. Le signal Y présent sur la borne 32 est de niveau logique « 1 » uniquement pendant la durée 8T précédant le retour à l'état logique « 0 » du signal Q. L'interruption de la ligne est commandée par le signal Q pour pouvoir intercaler, au début du signal codé, un message constitué de trois mots consécutifs particuliers. Ce message est nécessaire à la récupération d'une impulsion de synchronisation de signaux d'horloge lors du décodage.

Lorsque le signal Q est à l'état logique « 0 », les seize bits délivrés par le registre 6 sont stockés par le registre mémoire 12 après un passage dans l'inverseur 10. Le signal Y est alors à l'état « 0 », de sorte que l'inverseur 10 n'est commandé que lorsque le dispositif de commande 8 délivre un signal de niveau logique u égal à « 1 ».

Le registre mémoire 13 stocke les bits présents à la sortie du registre 12. Ces bits sont ensuites lus en série dans le registre 13 à la fréquence 2F du signal d'horloge $H_3$, et délivrés sur la borne de sortie 17.

A un instant quelconque le dispositif de commande 8 reçoit les deux derniers bits A et B de poids le plus fort du mot $B_a$ délivré par le registre 12 et les deux premiers bits C et D de poids le plus faible du mot $B_b$ délivré par le registre 6 au même instant.

D'après les états logiques de ces quatre bits A, B, C et D, il est facile d'en déduire que le bit B ou le bit C est « isolé », auquel cas le dispositif de commande 8 commande une inversion des bits du mot $B_b$. De plus, le mot $B_b$ est inversé lorsque les bits A, B, C et D sont dans le même état pour éviter une série trop longue de bits de même état.

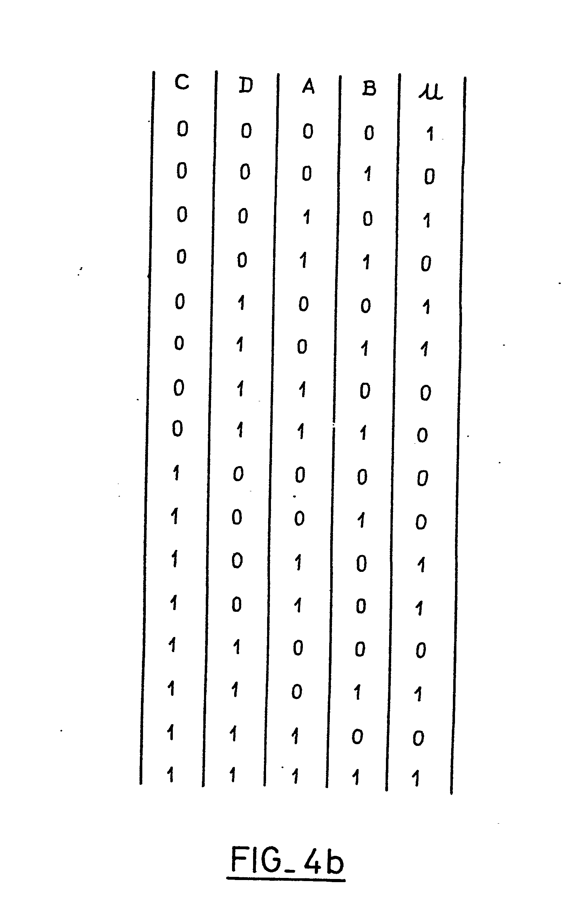

Sur la figure 4b est représenté un tableau donnant l'état logique u de la sortie du dispositif 8 dans tous les cas possibles de combinaisons des états des bits A, B, C et D.

Lorsque le signal Q est à l'état logique « 1 », les moyens de couplage sont commandés pour interrompre la ligne à la sortie du registre 6 pendant un temps égal à 24T. Le même signal Q déclenche la lecture du contenu de la mémoire 11 dans laquelle sont mémorisés les bits correspondant à un mot particulier R. En effet, il est nécessaire au début du signal codé de générer un message constitué soit par le mot particulier R suivi de R puis de son complément $\overline{R}$, soit par le mot $\overline{R}$ suivi de $\overline{R}$ puis de R, pour pouvoir récupérer une impulsion de synchronisation lors du décodage, ce qui sera expliqué ultérieurement.

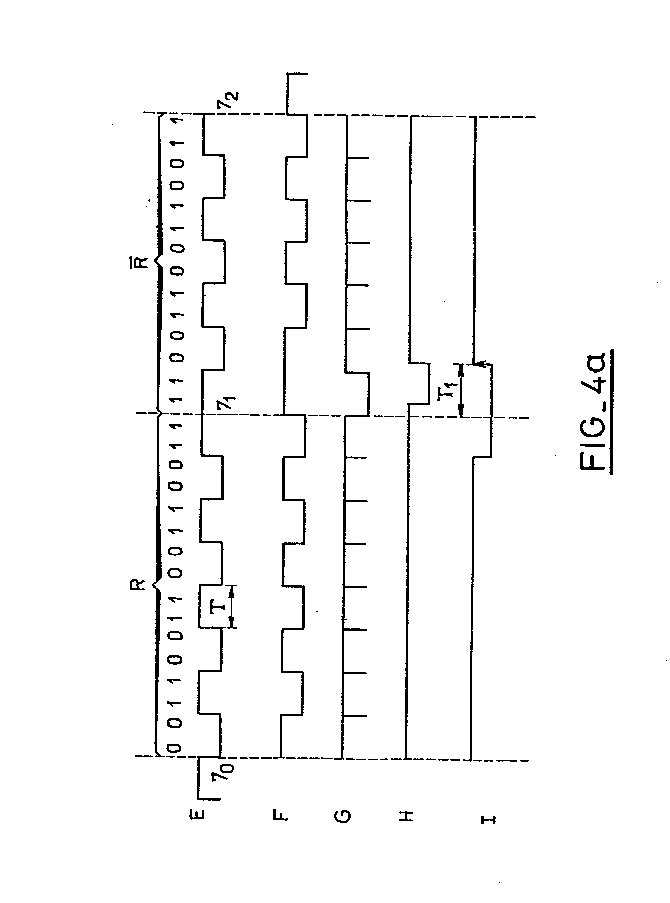

Le signal E de la figure 4a représente les états logiques du mot particulier R suivi du mot $\overline{R}$.

Soit t' l'instant auquel le niveau logique du signal Q passe de l'état « 0 » à l'état « 1 », soit $t_0$ l'instant t' + 8T, soit $t_1$ l'instant t' + 16T et soit $t_2$ l'instant t' + 24T.

Entre les instants t' et $t_1$, ce qui correspond à l'état logique « 1 » du signal Q et à l'état « 0 » du signal Y, il est généré à la sortie de l'inverseur 10 soit le mot R suivi de R, soit le mot $\overline{R}$ suivi de $\overline{R}$, suivant les bits de poids le plus fort du mot présent à la sortie du registre 12. Entre les instants $t_1$ et $t_2$, le mot présent à l'entrée de l'inverseur 10 est R, le mot présent à la sortie du registre 12 est soit R, soit $\overline{R}$. Dans le cas où R est à la sortie de ce registre 12, le signal de sortie de la porte, 9, commande une inversion des bits par l'inverseur 10 (la borne 32 est à l'état logique « 1 », la sortie du dispositif de commande est à l'état « 0 »).

Dans le cas où le mot $\overline{R}$ est à la sortie du registre 12, l'inverseur n'est pas commandé (la borne 32 et la sortie du dispositif de commande sont à l'état « 1 »).

Ainsi pendant la durée de l'état logique « 1 » du signal Q, il est obtenu sur la borne de sortie 17 soit les trois mots consécutifs R suivis de R puis de $\overline{R}$, soit $\overline{R}$ suivi de $\overline{R}$ puis de R.

Sur la figure 2, est représenté un mode de réalisation préféré d'un dispositif de décodage d'un signal codé suivant le procédé décrit précédemment.

Sur cette figure, une borne d'entrée 18, destinée à recevoir un signal codé, est reliée à un registre mémoire 19 à inscription en série et lecture en parallèle, à un dispositif d'initialisation 23, et à un dispositif 25 de récupération du signal d'horloge $H_3$ à la fréquence 2F. La sortie de ce dispositif 25 est couplée à l'entrée d'un diviseur 40 dont la sortie délivre le signal d'horloge $H_1$ à la fréquence F. La sortie du diviseur 40 est reliée à l'entrée d'un diviseur 24 dont la sortie délivre le signal d'horloge $H_2$ à la fréquence F/8.

Les diviseurs 40 et 24 comportent en outre une entrée d'initialisation connectée à la sortie du dispositif d'initialisation 23 à travers un différentiateur 50. Les seize sorties du registre mémoire 19 sont couplées aux seize entrées d'une mémoire morte 21 à travers un registre mémoire 20 à inscription et lecture en parallèle. Les huit sorties de cette mémoire 21 sont reliées aux huit entrées d'un registre mémoire 22 à inscription en parallèle et lecture en série. La sortie de ce registre 22 est reliée à une borne de sortie 26.

Le fonctionnement de ce dispositif du décodage est le suivant :

Le signal codé reçu sur la borne d'entrée 18 est constitué d'une suite de mots de seize bits à la fréquence 2F. La fréquence des mots est F/8, chacun de ces mots correspond à un état codé selon l'invention.

Les registres mémoire 19 et 20 permettent de délivrer en parallèle les seize bits de chaque mot formant le signal codé. Le registre mémoire 19 inscrit les bits du signal codé en série suivant la fréquence 2F du signal d'horloge $H_3$. Le registre mémoire 20 inscrit en parallèle les bits lus sur les seize sorties du registre 19 et délivre ces bits en parallèle sur ces seize sorties suivant la fréquence F/8 du signal d'horloge $H_2$.

La mémoire morte 21 comporte seize entrées d'adresse. Dans cette mémoire sont mémorisés les mots de huit bits correspondant à chacun des mots de seize bits du signal codé. Ainsi, à chaque combinaison de seize bits reçue par les entrées d'adresse de cette mémoire 21, le registre 22 mémorise le groupe de huits bits présents sur les huit sorties de la mémoire 21. Ce registre 22 restitue ces bits en série sur la borne 26 suivant la fréquence F du signal d'horloge $H_1$.

Le dispositif 25 reconstitue facilement le signal d'horloge $H_3$ de fréquence 2F à partir des mots particuliers R ou $\overline{R}$ reçus en début du signal codé. Ce dispositif permet ensuite un asservissement de ce signal $H_3$ sur les transitions du signal codé qui sont espacées d'un intervalle de temps $k/2T$ (k entier positif). Le diviseur 40 et le diviseur 24 permettent respectivement d'obtenir le signal d'horloge $H_1$ à la fréquence F et le signal d'horloge $H_2$ à la fréquence F/8. Afin que ces signaux d'horloge $H_1$, $H_2$ et $H_3$ soient en phase, le dispositif 23 génère une impulsion d'initialisation pour initialiser les diviseurs 40 et 24 à l'aide du message constitué du mot R suivi de R puis de

$\overline{R}$ ou bien du mot $\overline{R}$ suivi de $\overline{R}$ puis de R.

Sur la figure 3 est détaillé un exemple de réalisation du dispositif 23.

Sur cette figure, une borne d'entrée 27 correspondant à l'entrée du dispositif 23 est reliée à une première entrée d'une porte OU exclusif, 30, et à une deuxième entrée de cette porte à travers un dispositif à retard 29. La sortie de cette porte OU exclusif, 30, est reliée à l'entrée d'un filtre 31. La sortie de ce filtre 31 est couplée à une borne de sortie 28 à travers un multivibrateur 32.

Le fonctionnement de ce dispositif sera mieux compris à l'aide des diagrammes tension-temps décrits sur la figure 4a.

Sur cette figure sont représentés les signaux E, F, G, H et I, respectivement présents, entre les instants $t_0$ et $t_2$, sur la borne d'entrée 18 du décodeur, à la sortie du dispositif à retard 29, à la sortie de la porte OU exclusif, 30, à la sortie du filtre 31, et à la sortie du multivibrateur 32. L'instant noté $t_2$ est l'instant auquel le signal codé est reçu ; l'instant noté $t_0$ correspond à l'instant $t' + 8T$, $t'$ étant l'instant auquel le message constitué du mot particulier R suivi de R puis de $\overline{R}$ ou du mot $\overline{R}$ suivi de $\overline{R}$ puis de R est reçu.

Considérons que le dispositif 23 reçoive avant le début du signal codé un message constitué du mot R suivi de R puis de $\overline{R}$. Le signal E de la figure 4a représente la fin de ce message constituée du mot R suivi de $\overline{R}$, entre les instants $t_0$ et $t_2$.

La porte 30, réalise une fonction OU exclusif entre le signal E et le signal F qui représente le signal E retardé d'un retard T ($T = 1/F$), ce retard étant obtenu à l'aide du dispositif à retard 29. Le signal G qui résulte de cette corrélation est filtré par le filtre 31 pour éliminer les impulsions parasites. Ce filtre 31 délivre le signal H. La transition de l'état « 0 » à l'état « 1 » de ce signal H déclenche le multivibrateur 32. Ainsi, le signal de sortie I de ce multivibrateur 32 passe de l'état logique « 0 » à l'état « 1 » à l'instant $t_1 + T_1$, et est maintenu à cet état pendant tout le signal codé par les nombreuses transitions de l'état « 0 » à l'état « 1 » du signal H. En effet, tous les mots du signal codé autre que le mot R font apparaître au moins une transition de l'état « 0 » à l'état « 1 » du signal H. Ainsi, le multivibrateur 32 sera maintenu à l'état « 1 » pendant tout le signal codé. La durée pendant laquelle le multivibrateur 32 se maintient à l'état « 1 », sans transition de l'état « 0 » à l'état « 1 » sur son entrée, est de 15T. De sorte qu'entre les instants $t'$ et $t_1$, l'état de sortie du multivibrateur 32 passe à l'état « 0 » avant que la transition, caractéristique de l'instant $t_1 + T_1$, ne se produise.

La durée $T_1$ étant une constante caractéristique du filtre 31 et du multivibrateur 32, le front montant du signal I, qui se produit à l'instant $t_1 + T_1$, permet après une différentiation par le différentiateur 50 d'initialiser les diviseurs 40 et 24. Les signaux d'horloge $H_2$ et $H_1$ sont ainsi en phase avec le signal d'horloge $H_3$.

En ce qui concerne la réalisation pratique des circuits décrits ci-dessus il est à la portée de l'homme de l'art de réaliser un dispositif de codage et un dispositif de décodage, soit à l'aide de circuits de type TTL (« Transistors Transistors Logic » en littérature anglaise) soit à l'aide de circuits de type E.C.L. (« Emitters Couplage Logic » en littérature anglaise) suivant la fréquence de travail des éléments de ces dispositifs.

La mémoire 21 utilisée par le dispositif de décodage décrit sur la figure 2 peut être constituée soit de 8 mémoires PROM (« Programmable read only memory » en littérature anglaise) de 64K bits, soit de six mémoires F.P.L.A. (« Field programmable logic away » en littérature anglaise). Dans ce dernier cas, un inverseur est intercalé entre le registre mémoire 20 et les six mémoires F.P.L.A. Cet inverseur est commandé par le bit de poids le plus fort du mot présent à la sortie du registre 20, de sorte qu'il ne délivre que des mots commençant uniquement par un bit à l'état « 0 » (ou à l'état « 1 »).

Pour le dispositif de codage, il est aussi à la portée de l'homme de l'art de remplacer la mémoire 11, les moyens de couplage 7 et la porte OU exclusif, 9, par des éléments permettant de générer un message particulier pour récupérer l'impulsion de synchronisation.

Le procédé de codage selon l'invention a été décrit à partir d'un signal d'entrée comportant des groupes de huit bits, mais un procédé analogue peut s'appliquer pour un signal d'entrée comportant des groupes dont le nombre n de bits est quelconque (n entier positif).

Cependant, il n'est possible de coder la totalité des $2^n$ états que pour n égal à huit ou n supérieur à huit.

Par contre, si les conditions d'utilisation du signal codé permettent la présence d'une composante continue dans son spectre de fréquence, il est possible de réduire le débit binaire de ce signal en utilisant des mots de seize bits constitués de β bits à l'état « 0 » et de m bits à l'état « 1 » (β et m entiers positifs avec m + β = n).

**Revendications**

1. Procédé de codage d'un signal d'entrée constitué d'une suite de groupes $G_i$ de n données binaires (i pouvant varier de 1 à $2^n$, n entier positif), la fréquence de répétition des données binaires étant F, caractérisé en ce qu'il est associé à chaque groupe un couple de nombre binaires ($A_i$, $\overline{A_i}$), $\overline{A_i}$ étant le complément de $A_i$ et chacun de ces deux nombres étant défini par 2n bits dont la fréquence de répétition est 2F avec autant de bits à l'état « 1 » que de bits à l'état « 0 », le nombre ne comportant que des blocs d'au moins deux bits successifs identiques, sauf éventuellement les bits extrêmes de ces nombres, à savoir le bit de poids le plus faible et le bit de poids le plus fort, qui peuvent être isolés c'est-à-dire, respectivement non suivis et non précédés d'un bit identique, et en ce que le signal codé est formé en remplaçant les n bits de chaque groupe de bits $G_i$

du signal d'entrée, soit par les 2n bits du nombre correspondant $A_i$, soit par les 2n bits du nombre complément $\overline{A_i}$, de façon que le bit de poids le plus faible du nombre choisi et que le bit de poids le plus fort du nombre binaire associé au groupe précédent ne soient pas isolés dans le signal codé.

2. Procédé selon la revendication 1, caractérisé en ce qu'il est généré au début du signal codé un message constitué d'une suite de mots particuliers pour pouvoir récupérer facilement les signaux d'horloge lors du décodage, et en ce que le message est constitué de nombres binaires R suivi du nombre $\overline{R}$, le nombre R étant constitué d'une suite de $2n/\alpha$ bits ($\alpha = 2n/\beta$, $\alpha$ et $\beta$ entiers positifs) dans le même état logique suivis de $2n/\alpha$ bits dans un état logique inverse.

3. Dispositif de codage d'un signal d'entrée constitué d'une suite de groupes $G_i$ (i pouvant varier de 1 à $2^n$, n entier positif) de n données binaires, mettant en œuvre le procédé selon la revendication 1, la fréquence de répétition des données binaires étant F, celle des groupes étant F/n, comportant un registre à mémoire (2 et 3) à inscription en série et lecture en parallèle recevant le signal binaire et délivrant simultanément les n bits de chaque groupe suivant la fréquence F/n, caractérisé en ce qu'il comporte une première mémoire morte (4 et 5) ayant n entrées d'adresse recevant respectivement les n bits de chaque groupe suivant la fréquence F/n, et délivrant un nombre binaire $A_q$ (q compris entre 1 et $2^n$) de 2n bits associé à chaque groupe selon le procédé de la revendication 1 ; un premier registre mémoire (6) à écriture et lecture en parallèle mémorisant la valeur de ce nombre binaire $A_q$ ; un inverseur (10) pour inverser cette valeur ayant une entrée de commande ; un deuxième registre mémoire (12) à écriture et lecture en parallèle pour mémoriser soit le nombre $A_q$, soit le nombre complément $\overline{A_q}$, délivré par l'inverseur ; un dispositif de commande (8) ayant une première et une deuxième entrée couplées respectivement à une première et à une deuxième sortie du premier registre à mémoire (6), une troisième et une quatrième entrée couplées respectivement à une première et une deuxième sortie du deuxième registre mémoire (12), et une sortie couplée à l'entrée de commande de l'inverseur (10), un registre mémoire (13) à inscription en parallèle et lecture en série pour délivrer en série à la fréquence 2F les bits du nombre binaire mémorisés par le deuxième registre (12).

4. Dispositif de codage selon la revendication 3, mettant en œuvre le procédé selon la revendication 2, caractérisé en ce qu'il comporte des moyens de couplage (7) pour interrompre les liaisons entre le premier registre mémoire (6) et l'inverseur (10) ainsi qu'entre le premier registre (6) et le dispositif de commande (8), cette interruption se produisant pendant une durée τ précédant le début du signal codé ; une deuxième mémoire (11) contenant en mémoire les bits du nombre caractéristique R ayant une première et une deuxième sortie respectivement couplées à la première et à la deuxième entrée du dispositif de commande (8), cette deuxième mémoire (11) délivrant les bits du nombre R uniquement pendant le temps τ, de sorte que le deuxième registre mémoire (12) mémorise pendant la durée τ soit le nombre R, soit le nombre R̄, délivré par l'inverseur, et en ce qu'il comporte une porte OU exclusif (9) ayant une première entrée couplée à la sortie du dispositif de commande (8), une sortie couplée à l'entrée de commande de l'inverseur (10), et une deuxième entrée permettant de commander l'inverseur (10) de façon à avoir un message constitué soit par des bits de V nombres binaires R (V entier positif) suivis des bits du nombre R̄ soit par des bits de V nombres binaires R̄ suivis des bits du nombre R.

5. Dispositif de décodage propre à décoder un signal codé selon le procédé de la revendication 2, caractérisé en ce qu'il comporte un registre mémoire (19 et 20) à inscription en série et lecture en parallèle recevant le message et le signal codé et délivrant simultanément les 2n bits de chacun des nombres binaires formant le signal codé ; des moyens de mémoire morte (21) recevant selon la fréquence de répétition F/n les 2n bits de chacun des nombres binaires du signal codé et délivrant en parallèle les n bits du groupe associé selon le procédé de la revendication 2 ; un registre mémoire (22) à inscription en parallèle et lecture en série pour délivrer en série à la fréquence F les bits du groupe généré par les moyens de mémoire (21), et en ce qu'il comporte un dispositif de synchronisation (23, 50, 24, 40 et 25) ayant une entrée destinée à recevoir le message suivi du signal codé, et trois sorties délivrant respectivement un premier signal d'horloge à la fréquence 2F, un deuxième signal d'horloge à la fréquence F et un troisième signal d'horloge à la fréquence F/n, ces trois signaux étant en phase.

6. Dispositif de décodage selon la revendication 5, caractérisé en ce que le dispositif de synchronisation comporte un dispositif d'asservissement (25) du premier signal d'horloge à partir du message et du signal codé ; un premier diviseur (40) délivrant le deuxième signal d'horloge à partir du premier signal d'horloge ; un deuxième diviseur (24) délivrant le troisième signal d'horloge à partir du deuxième signal d'horloge, ces deux diviseurs ayant en outre une entrée d'initialisation ; et un dispositif d'initialisation (23) des diviseurs recevant le message et le signal codé ayant une sortie couplée à l'entrée d'initialisation des diviseurs.

7. Dispositif de décodage selon la revendication 6, caractérisé en ce que le dispositif d'initialisation (23) comporte une porte OU exclusif (30) ayant une première entrée recevant le message et le signal codé, et une deuxième entrée couplée à la première entrée à travers un dispositif à retard (29) de retard n/α T (T égal à 1/F) ; un filtre (31) ayant une entrée couplée à la sortie de la porte OU exclusif ; et un multivibrateur (32) ayant une entrée couplée à la sortie du filtre, ce multivibrateur délivrant une transition de signal servant à initialiser les diviseurs.

8. Système de transmission caractérisé en ce qu'il comporte un dispositif de codage selon l'une des revendications 3 et 4.

9. Système de transmission caractérisé en ce qu'il comporte un dispositif de décodage selon l'une des revendications 5 à 7.

**Claims**

1. Method of coding an input signal formed of a sequence of groups $G_i$ of n binary data (i varying from 1 to $2^n$, n positive integer), the repetition frequency of the binary data being F, characterized in that each group is associated with a binary number pair $(A_i, \bar{A}_i)$ $\bar{A}_i$ being the complement of $A_i$ and each of these two numbers being defined by 2n bits the repetition frequency of which is 2F, the number of bits of the state « 1 » being the same as the number of bits of the state « 0 », the number comprising only blocks of at least two identical successive bits, with the eventual exception of the end bits of these numbers, i. e. the least significant bit and the most significant bit which may be isolated, i. e. respectively not followed and not preceded by an identical bit, and in that the coded signal is formed by replacing the n bits of each bit group $G_i$ of the input signal either with the 2n bits of the corresponding number $A_i$ or with the 2n bits of the complement number $\bar{A}_i$, so that the least significant bit of the selected number and the most significant bit of the binary number associated with the preceding group are not isolated within the coded signal.

2. Method in accordance with claim 1, characterized in that, at the beginning of the coded signal, a message is generated which is formed of a sequence of particular words for easily recovering the clock signals upon decoding, and in that the message is formed of binary numbers R followed by the number R̄, the number R being formed of a sequence of $2n/\alpha$ bits ($\alpha = 2n/\beta$, $\alpha$ and $\beta$ being positive integers) of the same logic state followed by $2n/\alpha$ bits of the opposite logic state.

3. Device for coding an input signal formed of a sequence of groups $G_i$ (i varying from 1 to $2^n$, n positive integer) of n binary data, for performing the method in accordance with claim 1, the repetition frequency of the binary data being F, that of the groups being F/n, comprising a storage register (2 and 3) for serial writing and parallel reading receiving the binary signal and delivering simultaneously the n bits of each group with the frequency F/n, characterized in that it comprises a first read only memory (4 and 5) having n address inputs respectively receiving the n bits of each group at the frequency F/n and delivering a binary number $A_q$ (q comprised between 1 and $2^n$) of 2n bits associated with each group in accordance with the method of claim 1 ; a first storage register (6) for parallel writing and reading, for storing the value of this binary number $A_q$ ; an inverter (10) for inverting this value, and having a control input ; a second storage register (12) for parallel reading and writing, for storing either the number $A_q$ or the complement number $A_q$ delivered by the inverter ; a control device (8) having first and second inputs respectively coupled to first and second outputs of the first storage register (6), third and fourth inputs respectively coupled to first and second outputs of the second storage register (12), and an output coupled to the control input of the inverter (10), a parallel writing, serial reading storage register (13) for serially delivering at the frequency 2F the bits of the binary number stored by the second register (12).

4. Coding device in accordance with claim 3, for performing the method in accordance with claim 2, characterized in that it comprises coupling means (7) for interrupting the connections between the first storage register (6) and the inverter (10) as well as between the first register (6) and the control device (8), said interruption occurring during a period $\tau$ preceding the beginning of the coded signal ; a second memory (11) storing the bits of the characteristic number R having first and second outputs respectively coupled to first and second inputs of the control device (8), said second memory (11) delivering the bits of the number R only during the period $\tau$ so that the second storage register (12) will store either the number R or the number $\overline{R}$ delivered by the inverter during the period $\tau$, and in that it comprises an exclusive OR gate (9) having a first input coupled to the output of the control device (8), an output coupled to the control input of the inverter (10), and a second input allowing to control the inverter (10) in a manner to have a message formed either of the bits of V binary numbers R (V positive integer) followed by the bits of the number $\overline{R}$, or the bits of V binary numbers $\overline{R}$ followed by the bits of the number R.

5. Decoding device for decoding a signal coded in accordance with the method of claim 2, characterized in that it comprises a storage register (19 and 20) for serial writing and parallel reading, receiving the message and the coded signal and simultaneously delivering the 2n bits of each of the binary numbers forming the coded signal ; read only memory means (21) receiving, at the repetition frequency F/n, the 2n bits of each of the binary numbers of the coded signal and delivering in parallel the n bits of the group associated therewith in accordance with the method of claim 2 ; a storage register (22) for parallel writing and serial reading, for serially delivering, at the frequency F, the bits of the group generated by the memory means (21), and in that it comprises a synchronization device (23, 50, 24, 40 and 25) having an input for receiving the message followed by the coded signal and three outputs respectively delivering a first clock signal of the frequency 2F, a second clock signal of the frequency F and a third clock signal of the frequency F/n these three signals being in phase.

6. Decoding device in accordance with claim 5, characterized in that the synchronization device comprises a device (25) for slaving the first clock signal by the message and by the coded signal ; a first divider (40) delivering the second clock signal from the first clock signal ; a second divider (24) generating the third clock signal from the second clock signal, these two dividers being further provided with an initialization input ; and an initialization device (23) of the dividers receiving the message and the coded signal, and having an output coupled to the input of the initialization inputs of the dividers.

7. Decoding device in accordance with claim 6, characterized in that the initialization device (23) comprises an exclusive OR gate (30) having a first input receiving the message and the coded signal, and a second input coupled to the first input through a delay device (29) having the delay $n/\alpha$ T (T equal to 1/F) ; a filter (31) having an input coupled to the output of the exclusive OR gate ; and a multivibrator (32) having an input coupled to the output of the filter, said multivibrator delivering a signal transition used for initialization of the dividers.

8. Transmission system, characterized in that it comprises a coding device in accordance with any of claims 3 and 4.

9. Transmission system, characterized in that it comprises a decoding device in accordance with any of claims 5 to 7.

**Ansprüche**

1. Verfahren zum Codieren eines Eingangsignals, das gebildet ist aus einer Folge von Gruppen $G_i$ zu n Binärdaten (worin i von 1 bis $2^n$ variieren kann, mit n ganzzahlig positiv), wobei die Wiederholungsfrequenz der Binärdaten F ist, dadurch gekennzeichnet, daß jeder Gruppe ein Binärzahlenpaar $(A_i, \overline{A_i})$ zugeordnet ist, wobei $\overline{A_i}$ der Komplementwert von $A_i$ ist und wobei jede dieser beiden Zahlen definiert ist durch 2n Bits, deren Wiederholungsfrequenz 2F ist, mit ebenso vielen Bits im Zustand « 1 » wie Bits im Zustand « 0 », wobei ferner die Zahl nur Blöcke von wenigstens zwei aufeinanderfolgenden identischen Bits enthält, außer evtl. die äußersten Bits dieser Zahlen, nämlich das niedrigstwertige Bit und das höchstwertige Bit, die isoliert sein können, d. h. daß auf sie jeweils kein identisches Bit folgt und ihnen jeweils kein identisches Bit vorausgeht, und daß das codierte Signal gebildet wird, indem die n Bits jeder Bitgruppe $G_i$ des Eingangssignals entweder ersetzt werden durch die 2n Bits der entsprechenden Zahl $A_i$ oder durch die 2n Bits der Komplementären Zahl $\overline{A_i}$, so daß das niedrigstwertige Bit der gewählten Zahl und das höchstwertige Bit derjenigen Binärzahl, welche der vorausgehenden Gruppe zugeordnet ist, in dem codierten Signal nicht isoliert sind.

2. Verfahren nach Anspruch 1, dadurch gekennzeichnet, daß am Anfang des codierten Signals eine Nachricht erzeugt wird, die aus einer Folge von besonderen Wörtern gebildet ist, um leicht die Taktsignale während des Decodierens wiedergewinnen zu können, und daß die Nachricht gebildet ist aus Binärzahlen R gefolgt von der Zahl $\overline{R}$, worin R gebildet ist aus einer Folge von $2n/\alpha$ Bits ($\alpha = 2n/\beta$, $\alpha$ und $\beta$ ganzzahlig positiv), die denselben Logikzustand aufweisen, gefolgt von $2n/\alpha$ Bits in einem entgegengesetzten Logikzustand.

3. Vorrichtung zum Codieren eines Eingangssignals, das aus einer Folge von Gruppen $G_i$, (worin i von 1 bis $2^n$ variieren kann, n ganzzahlig positiv) von n Binärdaten, zur Durchführung des Verfahrens nach Anspruch 1, wobei die Wiederholungsfrequenz der Binärdaten F ist, während die der Gruppen F/n ist, mit einem Speicherregister (2 und 3), in das seriell eingeschrieben und aus dem parallel ausgelesen wird und welches das Binärsignal empfängt und gleichzeitig die n Bits jeder Gruppe mit der Frequenz F/n abgibt, dadurch gekennzeichnet, daß sie einen ersten Festwertspeicher (4 und 5) mit n Adreßeingängen aufweist, die jeweils die n Bits jeder Gruppe mit der Frequenz F/n empfangen, und der eine Binärzahl $A_q$ (q zwischen 1 und $2^n$) aus zwei n Bits abgibt, welche jeder Gruppe gemäß dem Verfahren nach Anspruch 1 zugeordnet ist ; mit einem ersten Speicherregister (6), in das parallel eingeschrieben und aus dem parallel ausgelesen wird, zum Speichern des Wertes dieser Binärzahl $A_q$ ; mit einem einen Steuereingang aufweisenden Inverter (10) zum Invertieren dieses Wertes ; mit einem zweiten Speicherregister (12), in das parallel eingeschrieben und aus dem parallel ausgelesen wird, zum Speichern entweder der Zahl $A_q$ oder der Komplementzahl $\overline{A_q}$, die von dem Inverter abgegeben wird ; mit einer Steuervorrichtung (8), die einen ersten und einen zweiten Eingang aufweist, wovon der erste an einen ersten Ausgang und der zweite an einen zweiten Ausgang des ersten Speicherregisters (6) angeschlossen ist, während ihr dritter Eingang an einen ersten und ihr vierter Eingang an einen zweiten Ausgang des zweiten Speicherregisters (12) angekoppelt ist und ihr Ausgang mit dem Steuereingang des Inverters (10) verbunden ist, und mit einem Speicherregister (13) zum parallelen Einschreiben und seriellen Auslesen zum seriellen Abgeben der Bits der durch das zweite Register (12) gespeicherten Binärzahl mit der Frequenz 2F.

4. Codiervorrichtung nach Anspruch 3, zur Durchführung des Verfahrens nach Anspruch 2, dadurch gekennzeichnet, daß sie Kopplungseinrichtungen (7) zum Unterbrechen der Verbindungen zwischen dem ersten Speicherregister (6) und dem Inverter (10) sowie zwischen dem ersten Register (6) und der Steuervorrichtung (8) umfaßt, wobei diese Unterbrechung während einer Dauer $\tau$ erfolgt, welche dem Anfang des codierten Signals vorausgeht ; mit einem zweiten Speicher (11), in welchem die Bits der charakteristischen Zahl R gespeichert sind und welcher einen ersten und einen zweiten Ausgang aufweist, von denen der erste mit dem ersten Eingang und der zweite mit dem zweiten Eingang der Steuervorrichtung (8) verbunden ist, wobei dieser zweite Speicher (11) die Bits der Zahl R nur während der Zeit $\tau$ ausgibt, so daß das zweite Speicherregister (12) während der Dauer $\tau$ entweder die Zahl R oder die Zahl $\overline{R}$ speichert, die durch den Inverter abgegeben wird, und daß sie eine Exklusiv-OR-Schaltung (9) enthält, deren erster Eingang an den Ausgang der Steuervorrichtung (8) angekoppelt ist, deren Ausgang mit dem Steuereingang des Inverters (10) verbunden ist und deren zweiter Eingang es ermöglicht, den Inverter (10) so zu steuern, daß eine Nachricht erhalten wird, die entweder gebildet ist aus den Bits von V Binärzahlen R (V ganzzahlig positiv) gefolgt von den Bits der Zahl $\overline{R}$, oder aus den Bits von V Binärzahlen $\overline{R}$ gefolgt von den Bits der Zahl R.

5. Decodiervorrichtung zum Decodieren eines Signals, das nach den Verfahren gemäß Anspruch 2 codiert ist, dadurch gekennzeichnet, daß sie ein Speicherregister (19 und 20) umfaßt, in das seriell eingeschrieben und aus dem parallel ausgelesen wird und welches die Nachricht und das codierte Signal empfängt und die gleichzeitig die 2n Bits jeder der Binärzahlen ausgibt, welche das codierte Signal bilden ; mit Festwertspeichermitteln (21), die mit der Wiederholungsfrequenz F/n die 2n Bits jedes der Binärwörter des codierten Signals empfangen und parallel die n Bits der Gruppe abgeben, die gemäß dem Verfahren nach Anspruch 2 zugeordnet sind ; mit einem Speicherregister (22), in das parallel eingeschrieben und aus dem seriell ausgelesen wird, zum seriellen Abgeben der Bits der durch die Speichermittel (21) erzeugten Gruppe mit der Frequenz F, und daß sie eine Synchronisationsvorrichtung (23, 50, 24, 40 und 25) umfaßt, die einen zum Empfangen der von dem codierten Signal gefolgten Nachricht bestimmten Eingang und drei Ausgänge aufweist, von denen der erste ein erstes Taktsignal der Frequenz 2F, der zweite ein zweites Taktsignal der Frequenz F und der dritte ein drittes Taktsignal der Frequenz F/n abgibt, wobei diese drei Signale in Phase sind.

6. Decodiervorrichtung nach Anspruch 5, dadurch gekennzeichnet, daß die Synchronisationsvorrichtung eine Vorrichtung (25) zum Regeln des ersten Taktsignals durch die Nachricht und das codierte Signal umfaßt ; mit einem ersten Teiler (40), welcher das zweite Taktsignal aus dem ersten Taktsignal ableitet ; mit einem zweiten Teiler (24), der das dritte Taktsignal aus dem zweiten Taktsignal erzeugt, wobei diese beiden Teiler ferner einen Initiierungseingang aufweisen ; und mit einer Initiierungsvorrichtung (23) zum Initiieren der Teiler, welche die Nachricht und das codierte Signal empfängt und einen Ausgang aufweist, welcher an die Initiierungseingänge der Teiler angeschlossen ist.

7. Decodiervorrichtung nach Anspruch 6, dadurch gekennzeichnet, daß die Initiierungsvorrichtung (23) eine Exklusiv-OR-Schaltung (30) umfaßt, die einen ersten, die Nachricht und das codierte Signal empfangenden Eingang und einen zweiten, an den ersten Eingang über eine Verzögerungsschaltung (29) mit der Verzögerung

n/α T (T gleich 1/F) angekoppelten Eingang aufweist ; mit einem Filter (31), dessen Eingang an den Ausgang der Exklusiv-OR-Schaltung angekoppelt ist ; und mit einem Multivibrator (32), dessen Eingang an den Ausgang des Filters angeschlossen ist, wobei dieser Multivibrator einen Signalübergang abgibt, der zur Initiierung der Teiler dient.

8. Übertragungssystem, dadurch gekennzeichnet, daß es eine Codiervorrichtung nach einem der Ansprüche 3 und 4 enthält.

9. Übertragungssystem, dadurch gekennzeichnet, daß es eine Decodiervorrichtung nach einem der Ansprüche 5 bis 7 enthält.

0 026 699

FIG_1

0 026 699

FIG. 2

FIG. 3

FIG_4a

0 026 699

| C | D | A | B | $\mu$ |
|---|---|---|---|---|
| 0 | 0 | 0 | 0 | 1 |
| 0 | 0 | 0 | 1 | 0 |
| 0 | 0 | 1 | 0 | 1 |
| 0 | 0 | 1 | 1 | 0 |
| 0 | 1 | 0 | 0 | 1 |
| 0 | 1 | 0 | 1 | 1 |
| 0 | 1 | 1 | 0 | 0 |
| 0 | 1 | 1 | 1 | 0 |
| 1 | 0 | 0 | 0 | 0 |
| 1 | 0 | 0 | 1 | 0 |
| 1 | 0 | 1 | 0 | 1 |
| 1 | 0 | 1 | 0 | 1 |
| 1 | 1 | 0 | 0 | 0 |
| 1 | 1 | 0 | 1 | 1 |
| 1 | 1 | 1 | 0 | 0 |
| 1 | 1 | 1 | 1 | 1 |

## FIG_4b